# EUROPEAN PATENT APPLICATION

(11) **EP 2 164 127 A1**
(43) Date of publication of application: **17.03.2010**
(21) Application number: 09169172.5
(22) Date of filing: 01.09.2009
(51) Int. Cl.: H01M 10/42, H01M 10/48

(54) **Multi-cell battery system and numbering method for the cells thereof**

(30) Priority: 03.09.2008 JP 2008225520
(71) Applicant: Omron Corporation, Kyoto 600-8530 (JP)
(72) Inventor: Imamura, Kimihiko, Kyoto Kyoto 600-8530 (JP); Okaniwa, Masakazu, Kyoto Kyoto 600-8530 (JP); Ando, Masanori, Kyoto Kyoto 600-8530 (JP)
(74) Representative: Giovannini, Francesca

(57) **Abstract**

A multi-cell battery system includes a plurality of modules (1-1,1-2,1-3,1-4) connected in series, each of the modules comprising a battery cell (2-1,2-2,2-3,2-4) and a slave (3-1,3-2,3-3,3-4) for monitoring a state of the battery cell, and a master (10) for monitoring the state of the battery cell by communicating with the slave (3-1,3-2,3-3,3-4) of each of the plurality of modules (1-1,1-2,1-3,1-4). The master (10) transmits, in order, to the plurality of modules (1-1,1-2,1-3,1-4) a series of numbers to be numbered on each module (1-1,1-2,1-3,1-4) as a numbering signal (S2). Each of the plurality of modules (1-1,1-2,1-3,1-4) numbers the series of numbers in the series-connected order by receiving the numbering signal (S2) from the master (10) and executing numbering based on number information contained in the numbering signal (S2) when receiving a numbering reception request signal (S1) for executing the numbering, and transmitting the numbering reception request signal (S1) to a module (1-1,1-2,1-3,1-4) of a next stage in the series when the numbering is completed.

## Description

### BACKGROUND OF THE INVENTION

### 1. TECHNICAL FIELD

The present invention relates to a multi-cell battery system including a plurality of modules, which are connected in series and each of which includes a battery cell and a slave for monitoring the state of the battery cell, and a master for monitoring the state of the plurality of modules, and a management number numbering method.

### 2. RELATED ART

In electrical automobiles, hybrid cars, and the like, a multi-cell battery system is used in which a plurality of battery cells such as lithium ion battery is formed to a module, and the module is connected in series and used at high voltage. In such multi-cell battery system, temperature and output voltage of the battery cell in each module need to be monitored to be maintained at an optimum voltage value.

Conventionally, in such multi-cell battery system, the output voltage of each cell or the battery cell of each module is monitored, and the occurrence of trouble by the abnormality in the output voltage is detected (see e.g., Japanese Unexamined Patent Publication No. 2001-201522).

### SUMMARY

However, in the prior art, variation in the output voltage of the battery cell of each module, contact failure of the terminal, disconnection and instantaneous interruption may possibly occur depending on the vehicle body vibration and the vehicle environment, and the output voltage of the battery cell of each module is difficult to accurately monitor.

If trouble such as malfunction occurs in one of the modules, the module in which the trouble occurred needs to be specified. To this end, the modules are automatically numbered as wired regardless of how the modules are connected, where even if one module is replaced for repair etc., detection is made that numbering is not made, and thus numbering needs to be automatically carried out. However, in the related art, countermeasures for such problem are not described.

One or more embodiments of the present invention provide a multi-cell battery system capable of easily specifying the module where trouble occurred with a simple circuit configuration, and a management number numbering method.

A first aspect of the present invention is a multi-cell battery system including a plurality of modules, which are connected in series and each of which includes a battery cell and a slave for monitoring a state of the battery cell, and a master for monitoring the state of the battery cell by communicating with the slave of each of the plurality of modules; wherein the master transmits in order to the plurality of modules, a series of numbers to be numbered on each module as a numbering signal; and each of the plurality of modules numbers the series of numbers in the series-connected order by receiving the numbering signal from the master and executing numbering based on number information contained in the numbering signal when receiving a numbering reception request signal for executing the numbering, and transmitting the numbering reception request signal to a module of a next stage, which is connected in series, when the numbering is completed. The multi-cell battery system may comprise a plurality of modules connected in series, each of the modules comprising a battery cell and a slave for monitoring a state of the battery cell, and a master for monitoring the state of the battery cell by communicating with the slave of each of the plurality of modules. The master may transmit to each module, preferably in a predetermined sequence an identification tag, preferably a numbering signal comprising a predetermined number. In other words, the master preferably transmits sequentially to the plurality of modules a sequence of numbers to identify each module using numbering signals. Thus, each numbering signal may comprise a number to be assigned to a module. The master may transmit a sequence of integers to be assigned to the modules. The numbering may be performed when receiving the numbering signal and a numbering reception request signal. The numbering reception request signal may first be transmitted from the master to a first module. The numbering reception request signal may then be transmitted from module to module within the serial connection, preferably in a sequential manner. When the numbering is completed, each module may return to the master a numbering complete signal (i.e. a return signal), preferably comprising the predetermined number. This may enable the master to identify each module with a sequence of predetermined numbers. The numbering may comprise the steps of receiving a numbering signal from the master and storing the predetermined number comprised in the numbering signal. A subsequent step of transmitting the numbering complete signal is preferably envisaged to inform the master that the numbering is completed. If a numbering complete signal is not received by the master within a predetermined period of time following a numbering signal transmission, the master may determine that there is an abnormality.

A second aspect of the present invention is the multi-cell battery system, wherein if the numbering is not completed within a certain time in one of the plurality of modules, the master determines that abnormality occurred in the module.

A third aspect of the present invention is the multi-cell battery system, wherein each of the plurality of modules returns a numbering complete signal to the master when the numbering is completed; and the master determines that the numbering at the module that returned the numbering complete signal is completed if the numbering complete signal is received within a certain time, and determines that abnormality occurred in the module if the numbering complete signal is not received within the certain time.

A fourth aspect of the present invention is the multi-cell battery system, wherein when the master determines that abnormality occurred in one of the plurality of modules, the master and the plurality of modules again execute the operation of numbering the series of numbers to the plurality of modules.

A fifth aspect of the present invention is the multi-cell battery system wherein the numbering reception request signal is a signal that becomes effective when rising from Low level to High level, and is transmitted via a signal line connecting the modules in the series-connected order; and the numbering signal is transmitted from the master to the plurality of modules via a communication line for commonly connecting the master and the plurality of modules.

A sixth aspect of the present invention is the multi-cell battery system, wherein the numbering complete signal is transmitted from each of the plurality of modules to the master via the communication line.

A seventh aspect of the present invention is a management number numbering method of numbering a series of numbers in order with respect to a plurality of modules, which are connected in series and each of which includes a battery cell and a slave for monitoring a state of the battery cell, by a master for monitoring the state of the battery cell by communicating with the slave of each of the plurality of modules; wherein the master includes a step of: transmitting, in order, a series of numbers to be numbered on each of the plurality of modules as a numbering signal from the master to the plurality of modules; and each of the plurality of modules includes the steps of: receiving the numbering signal from the master when receiving a numbering reception request signal for executing the numbering, executing the numbering based on number information contained in the received numbering signal, and transmitting the numbering reception request signal to a module of a next stage, which is connected in series, when the numbering is completed.

A series of numbers to be numbered on each module is transmitted in order from the master to a plurality of modules as a numbering signal, where each of the plurality of modules numbers the series of numbers in the series-connected order by receiving the numbering signal from the master and executing the numbering based on the number information contained in the numbering signal when receiving a numbering reception request signal for executing the numbering based on the numbering signal from the master or the module of the previous stage, and transmitting the numbering reception request signal to the module of the next stage, which is connected in series, when the numbering is completed. If the numbering is not completed within a certain time in one of the plurality of modules, the master determines that abnormality occurred in the module. Therefore, the series of numbers can be numbered to the plurality of modules as wired regardless of how the modules are connected, and the module in which trouble occurred can be easily specified.

### BRIEF DESCRIPTION OF THE DRAWINGS

Fig. 1 is a block diagram showing a configuration of a multi-cell battery system according to an embodiment of the present invention;
Fig. 2 is a block diagram showing a schematic configuration of a master of the multi-cell battery system according to the present embodiment;
Fig. 3 is a block diagram showing a schematic configuration of a module of the multi-cell battery system according to the present embodiment;
Fig. 4 is a flowchart showing a main routine related to a numbering process of the master 10 of the multi-cell battery system according to the present embodiment;
Fig. 5 is a flowchart for describing the numbering operation on the master side of the multi-cell battery system according to the present embodiment;
Fig. 6 is a flowchart for describing the numbering operation on the module (slave) side of the multi-cell battery system;
Figs. 7A to 7C are block diagrams for describing the operation in a case where the numbering is normally executed in the numbering operation;
Figs. 8A to 8C are block diagrams for describing the operation in a case where normal and abnormal are detected in the numbering operation;
Fig. 9 is a flowchart for describing an abnormality check operation after the numbering according to the present embodiment; and
Figs. 10A and 10B are block diagrams for describing the abnormality check operation after the numbering.

### DETAILED DESCRIPTION

Hereinafter, preferred embodiments of the present invention will be described with reference to the drawings.

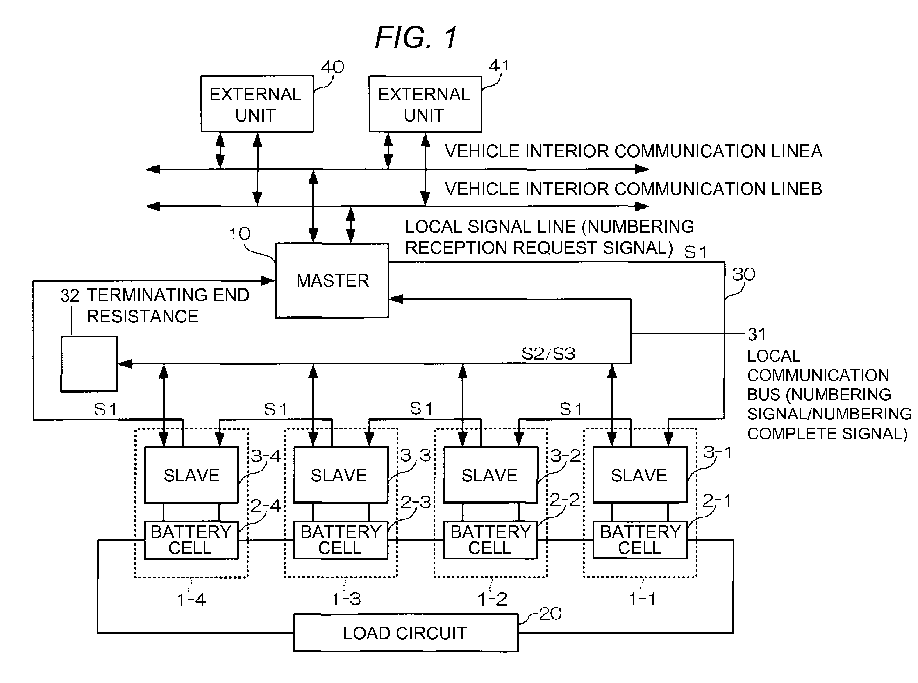

Fig. 1 is a block diagram showing a configuration of a multi-cell battery system according to an embodiment of the present invention. In the figure, the multi-cell battery system includes a plurality of modules 1-1 to 1-4, and a master 10. The plurality of modules 1-1 to 1-4 each includes a battery cell 2-1 to 2-4 in which a plurality of cells (e.g., four or eight) are stacked, and a slave 3-1 to 3-4. The battery cells 2-1 to 2-4 are connected in series, and supply a load circuit 20 with power. The slaves 3-1 to 3-4 manage the state of the corresponding battery cell 2-1 to 2-4. In particular, in the present embodiment, the slaves 3-1 to 3-4 are given a series of numbers according to the control from the master 10, to be hereinafter described, and communicate with the master 10 to notify of the battery information (voltage , temperature) of each battery cell 2-1 to 2-4.

Each slave 3-1 to 3-4 numbers itself when receiving a numbering signal S2 transmitted from the master 10 via a local communication bus 31 at a timing of receiving, from the slave of the previous stage, a numbering reception request signal S1, which becomes High level from Low level, via a local signal line 30, and returns a numbering complete signal S3 indicating that the numbering is normally completed to the master 10 via the local communication bus 31.

At the same time, each slave 3-1 to 3-4 transmits the numbering reception request signal S1, which becomes High level from Low level, via the local signal line 30 to the slave of the next stage. In other words, each slave 3-1 to 3-4 ignores the numbering signal S2 transmitted from the master 10 via the local communication bus 31 when not receiving the numbering reception request signal S1, which becomes High level from Low level, via the local signal line 30.

The master 10 executes a numbering process of giving a series of numbers to the plurality of modules 1-1 to 1-4, and collects and manages the battery information of each battery cell 2-1 to 2-4 by communicating with the plurality of modules 1-1 to 1-4 via the local communication bus 31 in time of normal operation. More specifically, if in an initial state in which the plurality of modules (slaves) 1-1 to 1-4 are not yet numbered, the master 10 executes the numbering process of giving a series of numbers to the plurality of modules (slaves) 1-1 to 1-4, and detects troubles that occur in each module 1-1 to 1-4 in time of the numbering process or in time of the communication.

In the numbering process, the master 10 first transmits the numbering reception request signal S1, which becomes High level from Low level, via the local signal line 30, and also transmits the numbering signal S2 including the number to be given via the local communication bus 31. The first slave (slave 3-1 in the illustrated example) that received the numbering signal S2 then numbers itself.

Subsequently, the master 10 transmits the numbering signal S2 including the next number via the local communication bus 31 every time the master 10 receives the numbering complete signal S3 via the local communication bus 31 from the slaves 3-1 to 3-4. Thus, the numbering of giving the series of numbers i is thus sequentially executed in the slaves 3-1 to 3-4. If the numbering complete signal S3 is not received via the local communication bus 31 from the slaves 3-1 to 3-4 of each module 1-1 to 1-4 with respect to the transmitted numbering signal S2, the master 10 determines that trouble occurred in the relevant module (slave, battery cell).

In time of communication after the numbering process, the master 10 sequentially communicates with the slaves 3-1 to 3-4 of the plurality of modules 1-1 to 1-4 via the local communication bus 31, and transmits/receives the battery information including the number i given to each module 1-1 to 1-4. In this case, if the communication from one of the slaves 3-1 to 3-4 of the modules 1-1 to 1-4 is interrupted in the relevant communication or the given number i is overlapped, determination is made that trouble occurred in the relevant module (slave, battery cell).

The master 10 collects the battery information from the slave 3-1 to 3-4 of each module 1-1 to 1-4, and performs exchange of various type of data, operation management, and the like with other external units (e.g., in-vehicle charger, rapid charger, other master) 40, 41 via vehicle interior communication lines A, B.

In time of the numbering process, trouble can be detected from that fact that (1) numbering cannot be carried out in slave 3-i of a certain module 1-i (numbering complete signal is not returned), (2) a number different from the numbering order is returned, where the number of the module where trouble occurred can be known in either case, and thus which module (module installed in which location) can be specified.

After the numbering, the trouble can be detected from the fact that (1) number is overlapped, (2) number is not returned, in this case, the number of the module where trouble occurred can be known in this case as well, and thus which module (module installed in which location) can be specified.

If trouble is detected after the numbering, the master 10 again executes the numbering process, and if the trouble is again detected in the numbering process, the master 10 again executes the numbering process after replacing the module.

The local signal line 30 is a simple signal line, and is used to transmit the numbering reception request signal S1, which becomes High level from Low level, for executing the numbering to the modules 1-1 to 1-4. The local communication bus 31 is a so-called data bus, and is used to transmit/receive information such as a series of numbers and battery information.

That is, if only the local communication bus 31 is used to number the modules 1-1 to 1-4, the number to be numbered on the modules 1-1 to 1-4 and the instruction information on which module to execute numbering are to be transmitted/received, and the response from the modules 1-1 to 1-4 need to be transmitted/received. Thus, the interface including hardware and software becomes complex. In the present embodiment, on the other hand, the local signal line 30 and the local communication bus 31 are separately used to realize the numbering operation with a simple interface including hardware and software.

In Fig. 1, four modules 1-1 to 1-4 are shown, but a few dozen modules may be actually arranged.

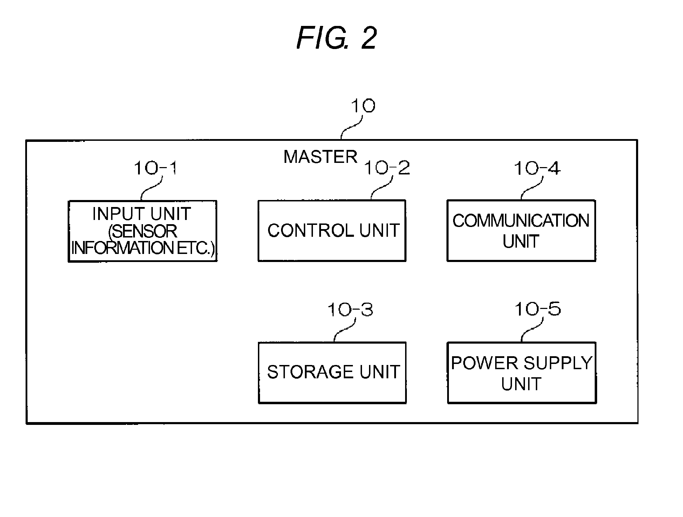

Fig. 2 is a block diagram showing a schematic configuration of the master of the multi-cell battery system. In the figure, the master 10 includes an input unit (sensor information etc.) 10-1, a control unit 10-2, a storage unit 10-3, a communication unit 10-4, and a power supply unit 10-5. The input unit 10-1 inputs information from various types of information. The control unit 10-2 executes the numbering process, and the like according to a predetermined program. The storage unit 10-3 stores various types of data, battery information, and the like. The communication unit 10-4 communicates with the outside via the local signal line 30, the local communication bus 31, and the vehicle interior communication lines A, B. The power supply unit 10-5 supplies each unit of the master 10 with power.

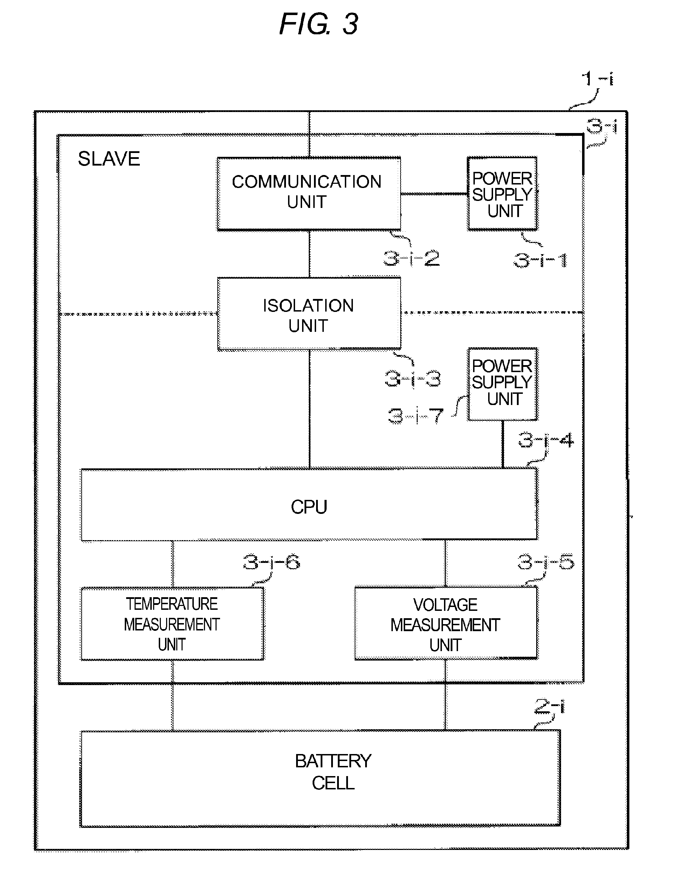

Fig. 3 is a block diagram showing a schematic configuration of the module of the multi-cell battery system. In the figure, the module 1-i (i = 1 to 4) includes the battery cell 2-i and the slave 3-i. The battery cell 2-i includes a plurality of stacked cells (e.g., four or eight), as described above. The slave 3-i includes a communication unit 3-i-1, a power supply unit 3-i-2, an isolation unit 3-i-3, a CPU 3-i-4, a voltage measurement unit 3-i-5, a temperature measurement unit 3-i-6, and a power supply unit 3-i-7.

The communication unit 3-i-1 transmits/receives various types of signals with the master 10 via the local signal line 30 and the local communication bus 31. The power supply unit 3-i-2 supplies power for driving the communication unit 3-i-1. The isolation unit 3-i-3 separates the circuits having a different power supply system. The CPU 3-i-4 transmits/receives various types of signals with the master 10 via the communication unit 3-i-1, and acquires battery information such as the voltage information of the battery by the voltage measurement unit 3-i-5 and the temperature information of the battery by the temperature measurement unit 3-i-6 according to a predetermined program. The voltage measurement unit 3-i-5 measures the output voltage of the battery cell 2-i. The temperature measurement unit 3-i-6 measures the temperature of the battery cell 2-i.

The operation of the present embodiment will now be described.

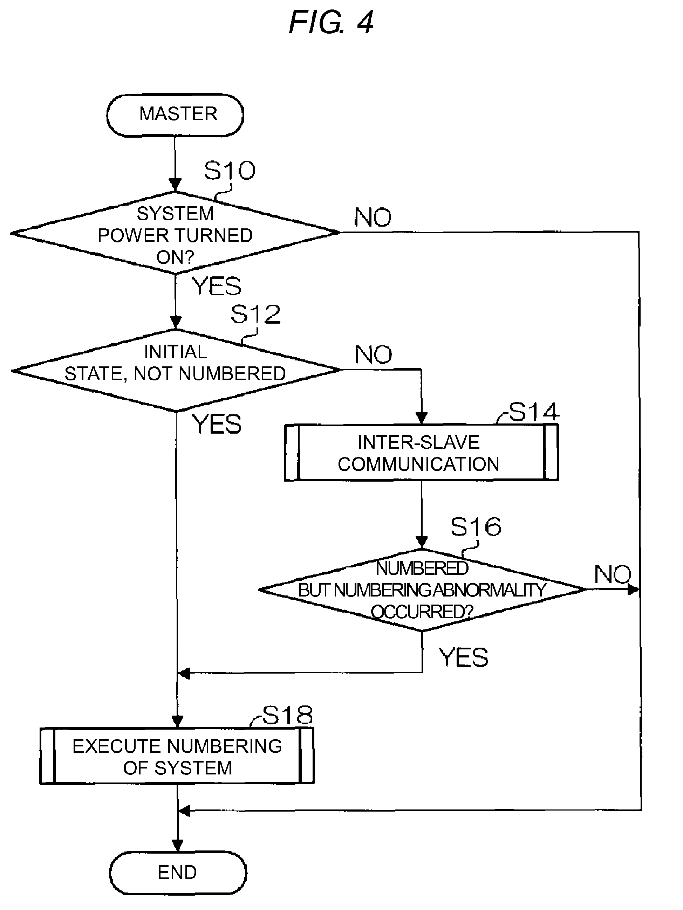

Fig. 4 is a flowchart showing a main routine related to the numbering process of the master 10 of the multi-cell battery system according to the present embodiment. The master 10 determines whether or not the system power is turned ON (step S10), and if the system power is turned ON, determines whether or not in the initial state and the modules 1-1 to 1-4 are not yet numbered (step S12). If in the initial state and the numbers are still not given, the numbering process of giving a series of numbers to all the modules 1-1 to 1-4 is executed (step S18). The details of the numbering process will be hereinafter described.

If not in the initial state and the modules 1-1 to 1-4 are already numbered, an inter-slave communication of communicating with the slaves 3-1 to 3-4 of the modules 1-1 to 1-4 in order and collecting the battery information is performed (step S14). In the inter-slave communication, whether some kind of numbering abnormality occurred in one of the modules 1-1 to 1-4 is determined. The details of the inter-slave communication will be hereinafter described.

In the inter-slave communication, whether or not some kind of numbering abnormality occurred in one of the modules is determined (step S16), where if some kind of numbering abnormality occurred in one of the modules, the numbering process of giving a series of numbers to all the modules 1-1 to 1-4 is executed in step S18 after the module replacement, more specifically, after the module where trouble occurred is replaced by the user and a predetermined operation (reset operation etc.) is performed.

If the numbering abnormality did not occur in the inter-slave communication, the master 10 ends the process, or continues the normal operation, that is, the inter-slave communication in step S14.

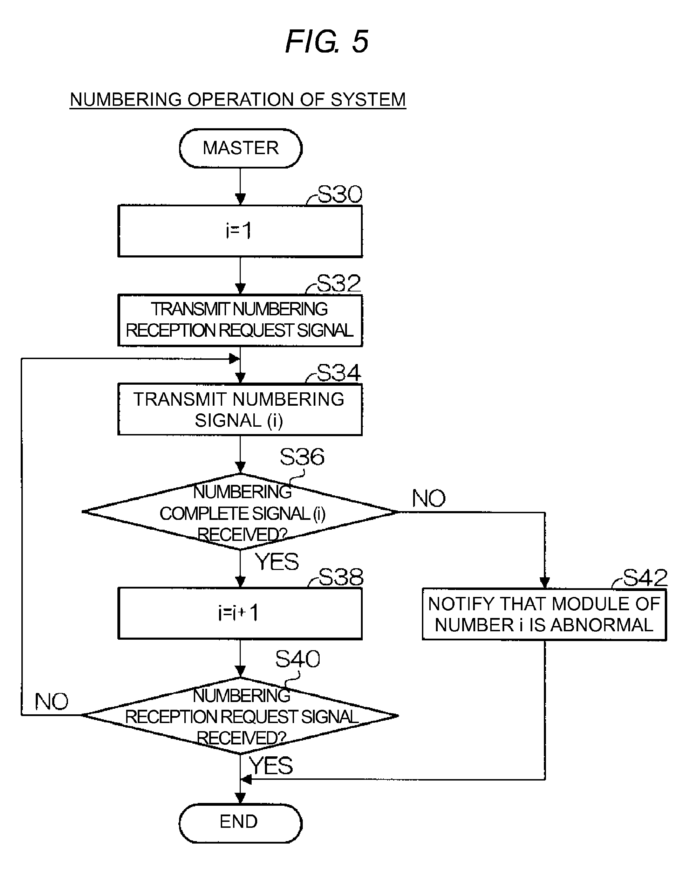

Fig. 5 is a flowchart for describing the numbering operation on the master side of the multi-cell battery system. The master 10 first initializes the series of numbers i to be given to the modules 1-1 to 1-4 to "1" (step S30). The master 10 then transmits the numbering reception request signal S1, which becomes High level from Low level, via the local communication line 30 (step S32), and transmits the numbering signal S2 including the number i via the local communication bus 31 (step S34).

The master 10 determines whether or not the numbering complete signal S3 including the number i is received via the local communication bus 31 from one of the slaves 3-1 to 3-4 of the modules 1-1 to 1-4 (step S36). In this case, if the numbering of the number i = 1 is normally completed, the numbering complete signal S3 including the number i is returned from the slave 3-1 of the module 1-1.

In other words, when the numbering reception request signal S1, which becomes High level from low level, and the numbering signal S2 including the number i = 1 are normally received, and the numbering of the number i = 1 is normally completed, the slave 3-1 of the module 1-1 returns the numbering complete signal S3 including the number i = 1 to the master 10. If some kind of trouble such as the operation abnormality of the slave 3-1 itself, or the communication path abnormality such as disconnection of the local signal line 30 or the local communication bus 31 between the slave 3-1 and the master 10 occurs, the numbering complete signal S3 including the number i = 1 is not returned, or the numbering complete signal S3 is returned but not number i = 1.

Therefore, when the numbering complete signal S3 including the number i is returned, the master 10 determines that the slave 3-1 of the module 1-1 is normal, increments the number i by one (step S38), determines whether or not the numbering reception request signal S1 is received from the last module via the local signal line 30, that is, whether or not the numbering on all the modules is completed (step S40), and returns to step S34 to repeat the above processes if the numbering reception request signal S1 is not received from the last module.

In other words, the master 10 transmits the numbering signal S2 including the number i via the local communication bus 31 in step S34 while incrementing the number i by one, determines whether or not the numbering complete signal S3 including the number i is received in step S36, and determines that the slave 3-i of the module 1-i is normal when receiving the numbering complete signal S3 including the number i. The numbering reception request signal S1, which becomes High level from Low level, is sequentially transmitted from the slave of the pre-stage to the slave of the post-stage.

In the series of operations described above, the master 10 determines that some kind of trouble such as the operation abnormality of the slave 3-i itself, or the communication path abnormality such as disconnection of the local signal line 30 or the local communication bus 31 between the slave 3-i and the master 10 occurred if the numbering complete signal S3 including the number i is not received, notifies (notify to user visually and/or acoustically) that the abnormality occurred in the slave 3-i of the i^{th} module 1-i (step S42), ends the process, and returns to the main routine. Therefore, the user can easily specify in which module the abnormality occurred, and the abnormal module can be rapidly replaced.

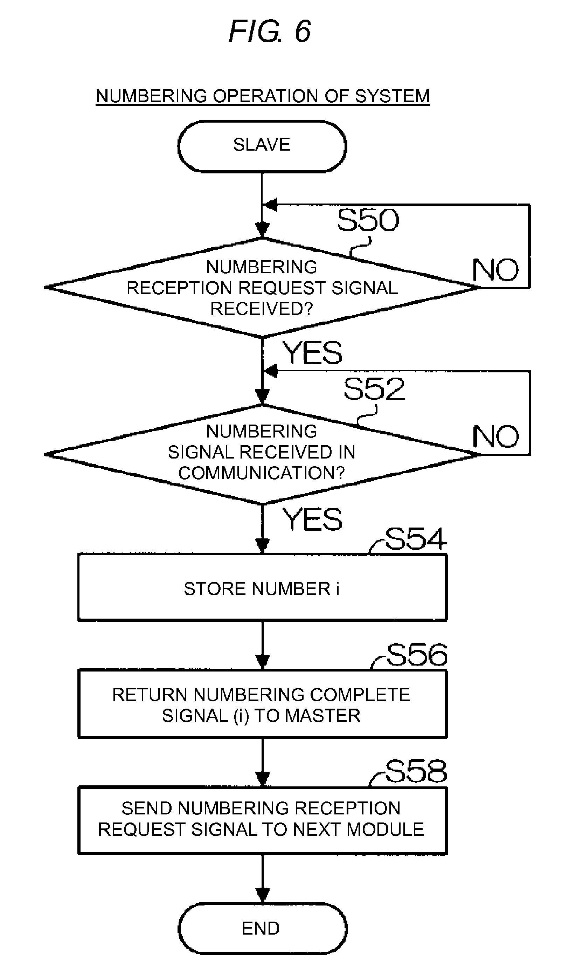

Fig. 6 is a flowchart for describing the numbering operation on the module (slave) side of the multi-cell battery system. The slaves 3-1 to 3-4 of the modules 1-1 to 1-4 first determine whether or not the numbering reception request signal S1, which becomes High level from Low level, is received via the local signal line 30 (step S50), and if the numbering reception request signal S1 is received, determines whether or not the numbering signal S2 including the number i is received from the master 10 via the local communication bus 31 (step S52).

The slave 3-1 to 3-4 stores the number i (step S54) when the numbering signal S2 including the number i is received from the master 10 via the local communication bus 31, returns the numbering complete signal S3 including the number i to the master 10 via the local communication bus 31 (step S56), transmits the numbering reception request signal S1, which becomes High level from Low level, to the slave of the next stage via the local signal line 30 (step S58), and ends the process.

Therefore, when the numbering reception signal S1, which becomes High level from Low level, and the numbering signal S2 including the number i are normally received, and the numbering of the number i is normally completed in the slaves 3-1 to 3-4, the master 10 determines that the module 1-i (slave 3-i) of number i is normal if the numbering complete signal S3 including the number i is returned to the master 10.

If the numbering complete signal S3 including the number i is not returned to the master 10, determination is made that some kind of trouble such as the operation abnormality of the slave 3-1 to 3-4 itself, or the communication path abnormality such as disconnection of the local signal line 30 or the local communication bus 31 between the slave 3-1 to 3-4 and the master 10 occurred on the master 10 side.

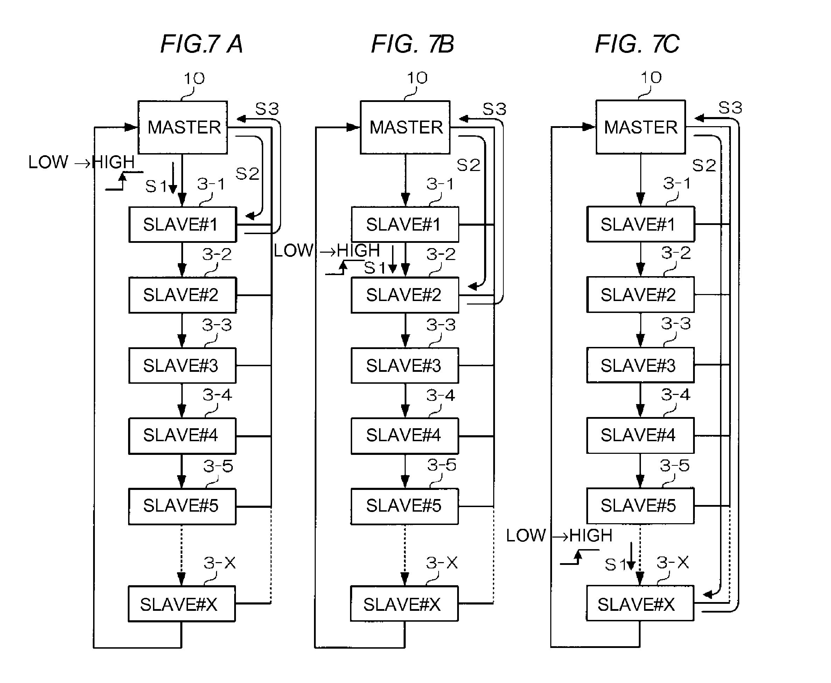

Figs. 7A to 7C are block diagrams for describing the operation in a case where the numbering is normally executed in the above-described numbering operation. In Figs. 7A to 7C, an example of numbering X modules 1-1 to 1-X will be described. In Fig. 7A, the master 10 first transmits the numbering reception request signal S1, which becomes High level from Low level, and transmits the numbering signal S2 including the number i via the local communication bus 31. In this case, the slave 3-1 receives the numbering reception request signal S1 and thus the slave 3-1 receives the numbering signal S2 including the number i and executes the numbering, whereas the other slaves 3-2 to 3-X do not receive the numbering reception request signal S1 and thus ignore the numbering signal S2 including the number i.

The slave 3-1 that received the numbering signal S2 including the number i returns the numbering complete signal S3 including the number i to the master 10 via the local communication bus 31 if the numbering is normally completed. The master 10 thereby determines that the numbering on the slave 3-1 is normally performed. Thereafter, as shown in Fig. 7B, the slave 3-1 transmits the numbering reception request signal S1, which becomes High level from Low level, to the slave 3-2 of the next stage via the local signal line 30. The master 10 transmits the numbering signal S2 including the number i = 2 on the local communication bus 31.

In this case, the slave 3-2 of the module 1-2 receives the numbering reception request signal S1 and thus the slave 3-2 receives the numbering signal S2 including the number i = 2 from the master 10 and executes the numbering, and returns the numbering complete signal S3 including the number i = 2 to the master 10 via the local communication bus 31 if the numbering is normally completed. The master 10 thereby determines that the numbering on the slave 3-2 of the module 1-2 is normally performed.

Similarly, Fig. 7C shows a case in which the numbering reception request signal S1, which becomes High level from Low level, is transmitted to the last slave 3-X via the local signal line 30. In this case, the master 10 transmits the numbering signal S2 including the number i = X on the local communication bus 31. The slave 3-X receives the numbering signal S2 including the number i = X from the master 10 and executes the numbering, and returns the numbering complete signal S3 including the number i = X to the master 10 via the local communication bus 31 if the numbering is normally completed. The master 10 thereby determines that the numbering on the slave 3-X of the module 1-X is normally performed.

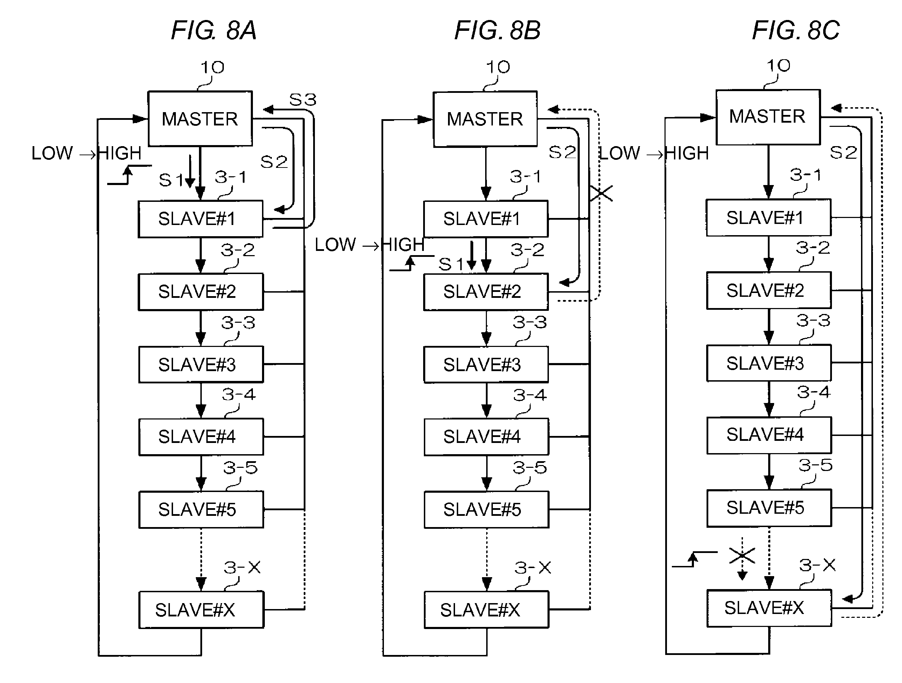

Figs. 8A to 8C are block diagrams for describing the operation in a case where normal and abnormal are detected in the above-described numbering operation. In Figs. 8A to 8C, an example of numbering X modules 1-1 to 1-X will be described, similar to Figs. 7A to 7C. In Fig. 8A, the master 10 first transmits the numbering reception request signal S1, which becomes High level from Low level, and transmits the numbering signal S2 including the number i via the local communication bus 31, similar to Fig. 7A. In this case, the slave 3-1 receives the numbering reception request signal S1 and thus the slave 3-1 receives the numbering signal S2 including the number i and executes the numbering. The slave 3-1 returns the numbering complete signal S3 including the number i to the master 10 via the local communication bus 31. The master 10 thereby determines that the numbering on the slave 3-1 of the module 1-1 is normally performed.

In Fig. 8B, the slave 3-1, in which numbering is normally completed, transmits the numbering reception request signal S1, which becomes High level from Low level, to the slave 3-2 of the next stage via the local signal line 30. The master 10 transmits the numbering signal S2 including the number i = 2 on the local communication bus 31.

However, in the example shown in Fig. 8B, the numbering complete signal S3 including the number i = 2 is not returned from the slave 3-2 to the master 10. Thus, determination is made that some kind of trouble such as the operation abnormality of the slave 3-2 itself of the module 1-2, or the communication path abnormality such as disconnection of the local signal line 30 or the local communication bus 31 between the slave 3-2 of the module 1-2 and the master 10 occurred, and the numbering is not normally performed on the master 10 side.

In the example shown in Fig. 8C, the numbering reception request signal S1, which becomes High level from Low level, is not transmitted to the slave 3-X of the last module 1-X via the local signal line 30. In this case, the master 10 transmits the numbering signal S2 including the number i = X on the local communication bus 31.

In this case, the numbering complete signal S3 including the number i = X is not returned from the slave 3-X. Thus, determination is made that some kind of trouble such as the operation abnormality of the slave 3-X itself of the module 1-X, or the communication path abnormality such as disconnection of the local signal line 30 or the local communication bus 31 between the slave 3-X of the module 1-X and the master 10 occurred, and the numbering is not normally performed on the master 10 side.

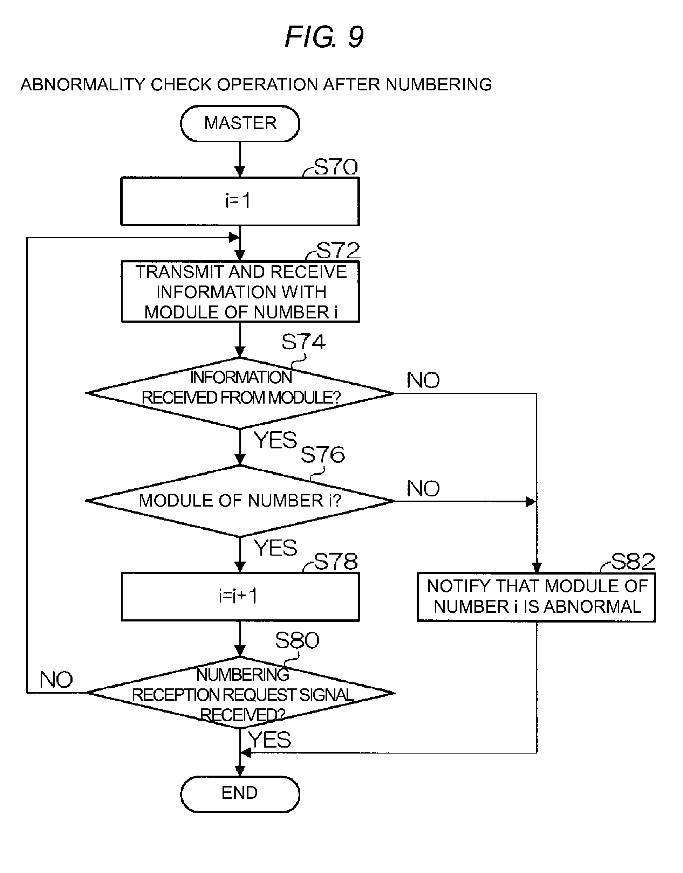

Fig. 9 is a flowchart for describing an abnormality check operation after the numbering. In the multi-cell battery system, the master 10 sequentially communicates with the slaves 3-1 to 3-4 of a plurality of modules 1-1 to 1-4 via the local communication bus 31 in time of communication after the numbering process, and transmits and receives the battery information including the number i given to each module 1-1 to 1-4. In this case, if communication from one of the slaves 3-1 to 3-4 of the modules 1-1 to 1-4 is interrupted in the communication or if the given number i is overlapping, determination is made that trouble occurred in the relevant module (slave, battery cell).

The master 10 first initializes the series of numbers i to be given to the modules 1-1 to 1-4 to "1" (step S70). The master 10 then transmits and receives information such as the battery information with the module 1-i of the number i via the local communication bus 31 (step S72).

The master 10 then determines whether or not the information such as the battery information is received via the local communication bus 31 from one of the slaves 3-1 to 3-4 of the modules 1-1 to 1-4 (step S74). The master 10 then determines whether or not the module 1-i of the number i when receiving the information such as the battery information from one of the slaves 3-1 to 3-4 of the modules 1-1 to 1-4 (step S76).

When the information such as the battery information is received from the module 1-i of the number i, the master 10 determines that the slave 3-i of the module 1-i is normal, increments the number i by one (step S78), determines whether or not the numbering reception request signal S1 is received from the last module via the local signal line 30, that is, whether or not the numbering on all the modules is completed (step S80), and returns to step S72 to repeat the above processes if the numbering reception request signal S1 is not received from the last module.

In other words, the master 10 transmits/receives the information such as the battery information with the module 1-i of the number i via the local communication bus 31 in step S72 while incrementing the number i by one, determines whether or not the information such as the battery information is received from the modules 1-i of the number i in steps S72, S74, and determines that the module 1-i is normal when receiving the information such as the battery information from the module 1-i of the number i.

In the series of operations described above, the master 10 determines that some kind of trouble such as the operation abnormality of the slave 3-i itself, or the communication path abnormality such as disconnection of the local signal line 30 or the local communication bus 31 between the slave 3-i and the master 10 occurred if the information such as the battery information is not received from the module 1-i of the number i, and notifies (notify to the user visually and/or acoustically) that the abnormality occurred in the module 1-i of the number i (step S82). The number i is numbered in the wired order of the module, and thus the user can easily specify in which module the abnormality occurred, and the abnormal module can be rapidly replaced.

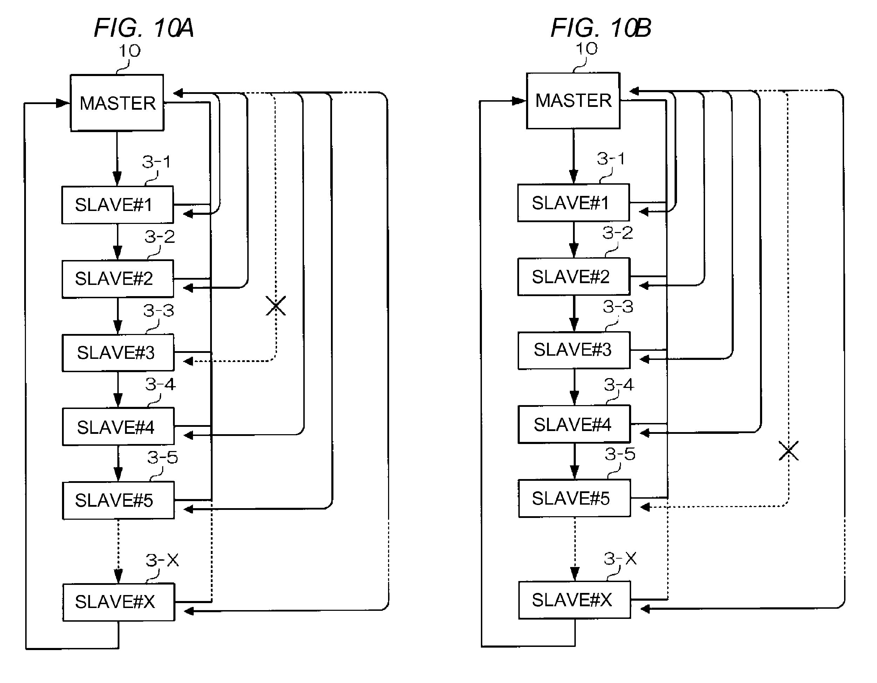

Figs. 10A and 10B are block diagrams for describing the abnormality check operation after the numbering. In Figs. 10A and 10B, an example of performing the abnormality check on X modules 1-1 to 1-X will be described. In Fig. 10A, the master 10 receives the information such as the battery information from the slaves 3-1, 3-2 or 3-4 to 3-X but cannot receive the information such as the battery information from the slave 3-3 when transmitting/receiving the information such as the battery information in order with the slaves 3-1 to 3-X via the local communication bus 31.

In this case, the master 10 determines that some kind of trouble such as the operation abnormality of the slave 3-3 itself, or the communication path abnormality such as disconnection of the local signal line 30 or the local communication bus 31 between the slave 3-3 and the master 10 occurred in the slave 3-3 of the module 1-3, and notifies that the abnormality occurred in the module 1-3.

In Fig. 10B, the master 10 cannot receive the information such as the battery information with the slave 3-5 when transmitting and receiving the information such as the battery information in order with the slaves 3-1 to 3-X via the local communication bus 31. In this case, the master 10 determines that some kind of trouble such as the operation abnormality of the slave 3-5 itself, or the communication path abnormality such as disconnection of the local signal line 30 or the local communication bus 31 between the slave 3-5 and the master 10 occurred in the slave 3-5 of the module 1-5, and notifies that the abnormality occurred in the module 1-5.

According to the present embodiment described above, a series of numbers can be numbered as wired with respect to a plurality of modules regardless of how the modules are connected.

According to the present embodiment, the communication port for numbering may not be used as the plurality of modules can be numbered with the normal input/output port (Low level or High level) by using the local signal line for numbering.

The present embodiment can be realized with a simple circuit by using the local signal line for numbering, whereby reduction in the number of parts and reduction in the mounting area can be achieved.

According to the present embodiment, non-numbering is detected and the numbering operation is automatically executed again to number a series of numbers even when replacing the module for maintenance, repair, or the like, or when the modules are interchanged, whereby the task can be alleviated.

Although the disclosure has been described with respect to only a limited number of embodiments, those skilled in the art, having benefit of this disclosure, will appreciate that other embodiments can be devised which do not depart from the scope of the present disclosure. Accordingly, the scope of the present disclosure should be limited only by the attached claims.

## Claims

1. A multi-cell battery system comprising:
a plurality of modules (1-1, 1-2, 1-3, 1-4) connected in series, each of the modules comprising a battery cell (2-1, 2-2, 2-3, 2-4) and a slave (3-1, 3-2, 3-3, 3-4) for monitoring a state of the battery cell;
a master (10) for monitoring the state of the battery cell by communicating with the slave (3-1, 3-2, 3-3, 3-4) of each of the plurality of modules (1-1, 1-2, 1-3, 1-4) ;
wherein the master (10) transmits, in order, to the plurality of modules (1-1, 1-2, 1-3, 1-4) a series of numbers to be numbered on each module as a numbering signal (S2); and
wherein each of the plurality of modules (1-1, 1-2, 1-3, 1-4) numbers the series of numbers in the series-connected order by receiving the numbering signal (S2) from the master and executing numbering based on number information contained in the numbering signal when receiving a numbering reception request signal (S1) for executing the numbering, and transmitting the numbering reception request signal (S3) to a module (1-1, 1-2, 1-3, 1-4) of a next stage, in the series when the numbering is completed.

2. The multi-cell battery system according to claim 1, wherein, if the numbering is not completed within a certain time in one of the plurality of modules, the master (10) determines that abnormality occurred in the module.

3. The multi-cell battery system according to claim 2,
wherein each of the plurality of modules (1-1, 1-2, 1-3, 1-4) returns a numbering complete signal (S3) to the master (10) when the numbering is completed; and
wherein the master determines that the numbering at the module (1-1, 1-2, 1-3, 1-4) that returned the numbering complete signal (S3) is completed if the numbering complete signal (S3) is received within a certain time, and determines that abnormality occurred in the module (1-1, 1-2, 1-3, 1-4) if the numbering complete signal (S3) is not received within the certain time.

4. The multi-cell battery system according to any of claims 1 to 3, wherein when the master (10) determines that abnormality occurred in one of the plurality of modules (1-1, 1-2, 1-3, 1-4), the master (10) and the plurality of modules (1-1, 1-2, 1-3, 1-4) again execute the operation of numbering the series of numbers to the plurality of modules (1-1, 1-2, 1-3, 1-4).

5. The multi-cell battery system according to any of claims 1 to 4, wherein
the numbering reception request signal (S1) is a signal that becomes effective when rising from Low level to High level, and is transmitted via a signal line (30) connecting the modules (1-1, 1-2, 1-3, 1-4) in the series-connected order; and
the numbering signal (S2) is transmitted from the master (10) to the plurality of modules (1-1, 1-2, 1-3, 1-4) via a communication line (31) for commonly connecting the master and the plurality of modules.

6. The multi-cell battery system according to claim 5, wherein the numbering complete signal (S3) is transmitted from each of the plurality of modules (1-1, 1-2, 1-3, 1-4) to the master (10) via the communication line (31).

7. A management number numbering method for a multi-cell battery system comprising a plurality of modules (1-1, 1-2, 1-3, 1-4), each of the modules being connected in series and comprising a battery cell (2-1, 2-2, 2-3, 2-4) and a slave (3-1, 3-2, 3-3, 3-4) for monitoring a state of the battery cell, and a master (10) for monitoring the state of the battery cell by communicating with the slave of each of the plurality of modules, the method comprising:
using the master to transmit, in order, a series of numbers to be numbered on each of the plurality of modules as a numbering signal from the master to the plurality of modules; and
using the plurality of modules to:
receive the numbering signal from the master when receiving a numbering reception request signal for executing the numbering,
execute the numbering based on number information contained in the received numbering signal, and
transmit the numbering reception request signal to a module of a next stage, which is connected in series, when the numbering is completed.
